# EUROPÄISCHE PATENTANMELDUNG

(11) **EP 3 429 182 A1**
(43) Veröffentlichungstag der Anmeldung: **16.01.2019**
(21) Anmeldenummer: 17181417.1
(22) Anmeldetag: 14.07.2017
(51) Int. Cl.: H04N 5/225, G02B 27/28

(54) **OPTISCHE OBJEKTERFASSUNGSVORRICHTUNG UND AUFSATZ**

(71) Anmelder: Siemens Aktiengesellschaft, 80333 München (DE)
(72) Erfinder: Müller, Peter-Michael, 75045 Walzbachtal-Wössingen (DE); Busch, Raimund, 76474 Au am Rhein (DE)

(57) **Zusammenfassung**

Eine Optische Objekterfassungsvorrichtung zur Erfassung von Objekten auf reflektierenden Oberflächen umfasst zumindest einen auf ein zu erfassendes Objekt (1) ausrichtbaren optischen Sensor (2), der dazu ausgestaltet und eingerichtet ist, aus Gegenstandspunkten Bildpunkte zu erzeugen. Außerdem ist zumindest eine auf das zu erfassende Objekt (1) ausrichtbare Beleuchtungseinheit (3) vorgesehen. Aus Objekt-Richtung ist vor dem optischen Sensor (2) und der Beleuchtungseinheit (3) zumindest ein zirkularer Polarisationsfilter (4) angeordnet, der zumindest ein Verzögerungselement (42) und einen sich an dieses anschließenden linearen Polarisationsfilter (41) umfasst. Dabei ist das Verzögerungselement (42) aus Objekt-Richtung (11) vor dem linearen Polarisationsfilter (41) angeordnet.

## Beschreibung

Optische Objekterfassungsvorrichtungen sind beispielsweise dafür vorgesehen, bewegte Objekte auf Fördereinrichtungen, wie Förderbändern, zu identifizieren und während eines Produktionsablaufs für eine Fertigungsautomatisierung zu verfolgen. Hierbei können die Objekte mit einem maschinenlesbaren Code markiert sein, der bei Passieren einer Kontrollstelle durch eine optische Objekterfassungsvorrichtung zu erfassen ist. Üblicherweise umfassen optische Objekterfassungsvorrichtungen zweidimensionale lichtempfindliche Sensoren mit Linsensystemen, die reale Gegenstände in eine Bildebene projizieren.

DE 10 2009 021231 A1 betrifft eine Leseeinrichtung für flächenhafte Codierungen, welche beispielsweise auf Oberflächen von Post- und Frachtstücken, Verpackungen aufgedruckt oder indirekt angebracht sind. Die Leseeinrichtung weist eine Optik zur Erfassung eines Codeaufdrucks auf einer Oberfläche und eine Verarbeitungseinheit auf. Die Verarbeitungseinheit umfasst Auswertemittel zur Dekodierung eines erfassten Codeaufdrucks und Korrekturmittel zur Bildung eines entzerrten Codeaufdrucks, bei dem insbesondere von der Optik der Leseeinrichtung hervorgerufene Verzerrungen des erfassten Codeaufdrucks korrigiert sind. Außerdem weist die Verarbeitungseinheit Verifikationsmittel auf, die den entzerrten Codeaufdruck auswerten und diesem einen Wert aus einer Markierungsqualitätsskala zuordnen, wobei die Werte der Markierungsqualitätsskala die Güte der Auswertbarkeit des Codeaufdrucks durch die Auswertemittel anzeigen. Darüber hinaus umfasst die Verarbeitungseinheit Meldemittel zur Generierung einer Meldung, wenn der Wert der Markierungsqualitätsskala eine abnehmende bzw. zu geringe Güte der Auswertbarkeit des Codeaufdrucks angenommen hat. Hiermit können Justagearbeiten an der Optik der Leseeinrichtung und eine verfrühte Auslösung von Wartungsarbeiten z.B. an Markungsdruckern vermieden werden.

In WO 2008/011222 A2 ist ein zirkularer Polarisationsfilter beschrieben, der einen linearen Polarisationsfilter, ein erstes λ/4-Verzögerungselement, eine cholesterische Flüssigkristallschicht und ein zweites λ/4-Verzögerungselement umfasst. Dabei sind die optischen Achsen des ersten λ/4-Verzögerungselements und des zweiten λ/4-Verzögerungselements rechtwinklig zueinander angeordnet. Auf diese Weise können Reflexionen vermindert und Kontrastverschlechterungen verhindert werden.

US 2007/0159695 A1 betrifft ein hinter einer Scheibe in einem geschlossenen Körper angeordnetes Kamerasystem, bei dem die Scheibe einen ersten und einen zweiten hintereinander angeordneten zirkularen Polarisationsfilter umfasst. Beide zirkularen Polarisationsfilter umfassen jeweils einen linearen Polarisationsfilter und ein λ/4-Verzögerungselement. Der lineare Polarisationsfilter ist dabei jeweils an einer vom Kamerasystem abgewandten Seite des jeweiligen zirkularen Polarisationsfilters angeordnet. Dementsprechend ist das λ/4-Verzögerungselement jeweils an einer dem Kamerasystem zugewandten Seite des jeweiligen zirkularen Polarisationsfilters angeordnet.

In vielen Anwendungsfällen, insbesondere in der Fertigungsautomatisierung, müssen mittels einer Kamera zu erfassende Objekte zusätzlich belichtet werden, beispielsweise mittels Blitz, um eine hinreichende Helligkeit für eine Bilderfassung zu erzielen. Insbesondere wenn Beleuchtung und Bildaufnahmesensor räumlich nahe zueinander angeordnet sind und die Beleuchtung direkt auf das zu erfassende Objekt ausgerichtet ist, kann es zu starken Spiegelungen bzw. Reflexionen der Beleuchtung bei der Bilderfassung kommen. Solche Reflexionen können die Bilderfassung wichtiger Bereiche des zu erfassenden Objekts stören und eine maschinelle Auswertung unmöglich machen.

Störende Reflexionen können vermieden werden, indem Beleuchtung und Bildaufnahmeeinheit mit unterschiedlichem Winkel auf das zu erfassende Objekt ausgerichtet werden. Allerdings erfordert dies neben Erfahrung relativ viel Zeit und räumliche Voraussetzungen, um Beleuchtung und Bildaufnahmeeinheit dementsprechend anordnen zu können. Dies gilt auch für eine getrennte Anbringung von Beleuchtung und Bildaufnahmeeinheit als weitere grundsätzliche Lösung. Auch durch indirekte Beleuchtung können Reflexionen vermieden werden. Dies erfordert jedoch zusätzlichen Beleuchtungsaufwand sowie genügend Raum und verursacht daher erhöhte Kosten. Eine weitere Option besteht in einer Verwendung gekreuzter linearer Polarisationsfilter. Problematisch dabei ist, dass die Polarisationsfilter einen genauen Kreuzungswinkel von 90 Grad zueinander aufweisen und zwei getrennte Polarisationsfilter verwendet müssen. Bei Beleuchtung eines zu erfassenden Objekts mit unpolarisiertem Licht können Reflexionen auch durch Anordnung eines zirkularen Polarisationsfilters vor der Bildaufnahmeeinheit nicht verhindert werden. Dies gilt auch bei Verwendung eines gemeinsamen zirkularen Polarisationsfilters für Beleuchtung und Bildaufnahmeeinheit, wenn das Verzögerungselement des zirkularen Polarisationsfilters der Beleuchtung und der Bildaufnahmeeinheit zugewandt angeordnet ist.

Aus JP 2016-033787 A und US 2016/034734 A1 sind optische Objekterfassungsvorrichtungen bekannt, bei denen auf eine Verwendung einer Beleuchtung mit und ohne gekreuzte Polarisationsfilter umgeschaltet werden kann. Auch hier sind voneinander getrennte lineare Polarisationsfilter erforderlich, die exakt aufeinander ausgerichtet werden müssen.

Der vorliegenden Erfindung liegt die Aufgabe zugrunde, eine einfach zu realisierende optische Objekterfassungsvorrichtung zu schaffen, mit der störende Auswirkungen von Reflexionen auf metallischen oder glänzenden Oberflächen deutlich reduziert werden können, sowie eine geeignete Nachrüstlösung für bestehende Objekterfassungsvorrichtungen anzugeben.

Diese Aufgabe wird erfindungsgemäß durch ein optisches Objekterfassungssystem mit den in Anspruch 1 genannten Merkmalen und durch einen Aufsatz mit den in Anspruch 9 genannten Merkmalen gelöst. Vorteilhafte Weiterbildungen der vorliegenden Erfindung sind in den abhängigen Ansprüchen angegeben.

Die erfindungsgemäße optische Objekterfassungsvorrichtung zur Erfassung von Objekten auf reflektierenden Oberflächen umfasst zumindest einen auf ein zu erfassendes Objekt ausrichtbaren optischen Sensor, der dazu ausgestaltet und eingerichtet ist, aus Gegenstandspunkten Bildpunkte zu erzeugen. Außerdem ist zumindest eine auf das zu erfassende Objekt ausrichtbare Beleuchtungseinheit vorgesehen. Aus Objekt-Richtung ist vor dem optischen Sensor und der Beleuchtungseinheit zumindest ein zirkularer Polarisationsfilter angeordnet, der zumindest ein Verzögerungselement und einen sich an dieses anschließenden linearen Polarisationsfilter umfasst. Dabei ist das Verzögerungselement aus Objekt-Richtung vor dem linearen Polarisationsfilter angeordnet. Der optische Sensor bzw. die Beleuchtungseinheit können beispielsweise von einem Gehäuse umfasst sein, wobei der zirkulare Polarisationsfilter lösbar am Gehäuse befestigt ist, insbesondere durch Aufschrauben.

Mit der erfindungsgemäßen Vorrichtung kann unpolarisiertes Licht der Beleuchtungseinheit beispielsweise nach Durchlaufen eines linksdrehend zirkularen Polarisationsfilters linksdrehend zirkular polarisiert auf das zu erfassende Objekt projiziert werden. Auf eine metallische oder glänzende Oberfläche des zu erfassenden Objekts projiziertes Licht wird dort mit umgekehrter zirkularer Polarisierung reflektiert, hier also beispielsweise rechtsdrehend zirkular polarisiert. Das reflektierte rechtsdrehend zirkular polarisierte Licht wird durch den linksdrehend zirkularen Polarisationsfilter gedämpft, so dass der optische Sensor ein im wesentlichen reflexionsfreies Abbild des zu erfassenden Objekts aufnehmen kann.

Vorzugsweise ist aus Objekt-Richtung vor dem optischen Sensor und hinter dem zirkularen Polarisationsfilter ein Linsensystem angeordnet. Das Linsensystem ist vorteilhafterweise zur Brennweitenadaption ausgestaltet und eingerichtet. Entsprechend einer besonders bevorzugten Ausgestaltung der vorliegenden Erfindung sind der optische Sensor, das Linsensystem und der zirkulare Polarisationsfilter auf dieselbe optische Achse ausgerichtet. Das Verzögerungselement kann insbesondere durch ein A/4-Verzögerungsplättchen gebildet sein.

Entsprechend einer vorteilhaften Ausgestaltung der erfindungsgemäßen Vorrichtung ist der zirkulare Polarisationsfilter derart aus Objekt-Richtung vor der Beleuchtungseinheit angeordnet, dass von der Beleuchtungseinheit ausgehendes unpolarisiertes Licht zirkular polarisiert auf das zu erfassende Objekt projiziert wird. Vorzugsweise ist der zirkulare Polarisationsfilter sowohl zwischen dem optischen Sensor und dem zu erfassenden Objekt als auch zwischen der Beleuchtungseinheit und dem zu erfassenden Objekt angeordnet.

Der erfindungsgemäße Aufsatz einer optische Objekterfassungsvorrichtung entsprechend vorangehenden Ausführungen umfasst einen aus Objekt-Richtung vor der optischen Objekterfassungsvorrichtung anordenbaren zirkularen Polarisationsfilter, der zumindest ein Verzögerungselement und einen sich an dieses anschließenden linearen Polarisationsfilter umfasst. Dabei ist das Verzögerungselement aus Objekt-Richtung vor dem linearen Polarisationsfilter angeordnet. Außerdem ist eine Befestigungsvorrichtung zur lösbaren Verbindung mit der optischen Objekterfassungsvorrichtung vorgesehen.

Die vorliegende Erfindung wird nachfolgend an einem Ausführungsbeispiel anhand der Zeichnung näher erläutert. Es zeigt
- Figur 1: eine schematische Darstellung einer optischen Objekterfassungsvorrichtung,
- Figur 2: zwei Beispielaufnahmen eines Quick Response Codes auf Hochglanzpapier, aufgenommen durch eine optische Objekterfassungseinrichtung ohne Polarisationsfilter und durch eine optische Objekterfassungseinrichtung entsprechend Figur 1,
- Figur 3: zwei zweite Beispielaufnahmen eines Data Matrix Codes auf einem Gussteil, aufgenommen durch eine optische Objekterfassungseinrichtung ohne Polarisationsfilter und durch eine optische Objekterfassungseinrichtung entsprechend Figur 1.

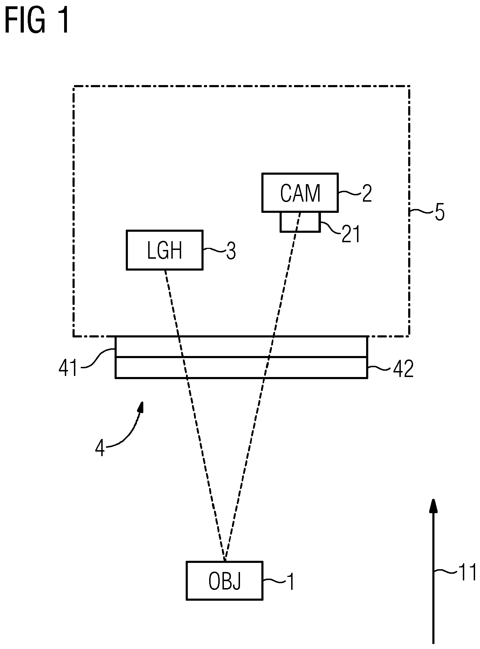

Die in Figur 1 dargestellte optische Objekterfassungsvorrichtung umfasst einen auf ein zu erfassendes Objekt 1 ausrichtbaren optischen Sensor 2. Der optische Sensor 2 ist dazu ausgestaltet und eingerichtet, aus Gegenstandspunkten Bildpunkte zu erzeugen und insbesondere zweidimensionale Codes auf einem zu identifizierenden Objekt 1 bzw. Objektmerkmale eines zu identifizierenden Objekts 1 zu erfassen.

Außerdem umfasst die in Figur 1 dargestellte optische Objekterfassungsvorrichtung eine auf das zu erfassende Objekt 1 ausrichtbare Beleuchtungseinheit 3. Aus Objekt-Richtung 11 ist vor dem optischen Sensor 2 und der Beleuchtungseinheit 3 ein gemeinsamer zirkularer Polarisationsfilter 4 angeordnet. Der zirkulare Polarisationsfilter 4 ist also sowohl zwischen dem optischen Sensor 2 und dem zu erfassenden Objekt 1 als auch zwischen der Beleuchtungseinheit 3 und dem zu erfassenden Objekt 1 angeordnet. Darüber hinaus umfasst der zirkulare Polarisationsfilter 4 im vorliegenden Ausführungsbeispiel einen linearen Polarisationsfilter 41 und ein sich an diesen anschließendes Verzögerungselement 42, das durch ein λ/4-Verzögerungsplättchen gebildet ist. Erfindungsgemäß ist das Verzögerungselement 42 aus Objekt-Richtung 11 vor dem linearen Polarisationsfilter 41 angeordnet. Somit ist der lineare Polarisationsfilter 41 an einer dem optischen Sensor 2 zugewandten Seite des zirkularen Polarisationsfilters 4 angeordnet, während das Verzögerungselement 42 an einer vom optischen Sensor 2 abgewandten Seite des zirkularen Polarisationsfilters 4 angeordnet ist. Der zirkulare Polarisationsfilter 4 ist aus Objekt-Richtung 11 derart vor der Beleuchtungseinheit 3 angeordnet, dass von der Beleuchtungseinheit 3 ausgehendes unpolarisiertes Licht zirkular polarisiert auf das zu erfassende Objekt 1 projiziert wird.

Der optische Sensor 2 und die Beleuchtungseinheit 3 sind im vorliegenden Ausführungsbeispiel von einem gemeinsamen Gehäuse 5 umfasst. Dabei ist der zirkulare Polarisationsfilter 4 auf das Gehäuse 5 aufgeschraubt und kann somit einfach demontiert bzw. ausgetauscht werden. Das Gehäuse 5 kann beispielsweise an einem in Figur 1 nicht dargestellten Trägerelement montiert sein. Damit kann der optische Sensor 2 quer zu einer Längsachse des Trägerelements mittels eines Förderbands bewegte Objekte erfassen.

Im vorliegenden Ausführungsbeispiel ist der optische Sensor 2 Bestandteil einer Digitalkamera, die ein Linsensystem 21 umfasst, das zur Brennweitenadaption ausgestaltet und eingerichtet ist. Das Linsensystem 21 ist aus Objekt-Richtung 11 vor dem optischen Sensor 2 und hinter dem zirkularen Polarisationsfilter 4 angeordnet. Vorzugsweise sind der optische Sensor 2, das Linsensystem 21 und der zirkulare Polarisationsfilter 4 auf dieselbe optische Achse ausgerichtet.

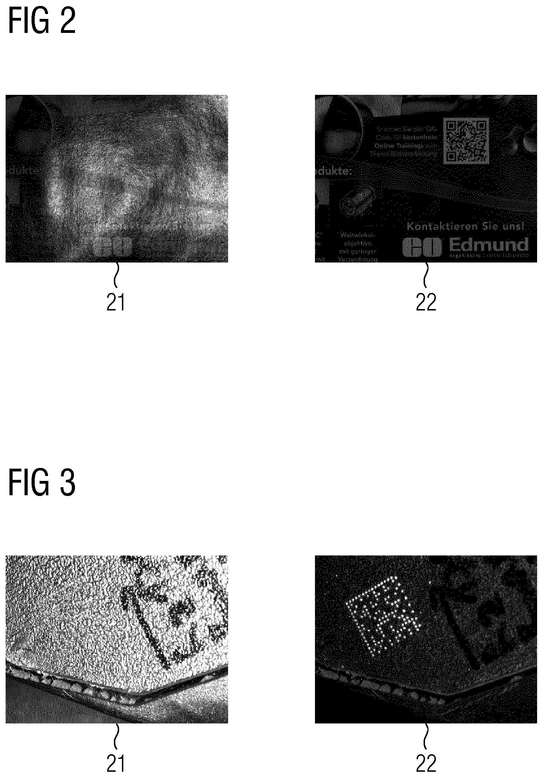

In Figur 2 sind eine erste Beispielaufnahme 21 und eine zweite Beispielaufnahme 22 eines Quick Response Codes (QR-Code) auf Hochglanzpapier dargestellt. Die erste Beispielaufnahme 21 des QR-Codes ist durch eine optische Objekterfassungseinrichtung ohne Polarisationsfilter mit einer Belichtungszeit von 600 µs aufgenommen. Dagegen ist die zweite Beispielaufnahme 22 des QR-Codes durch eine optische Objekterfassungseinrichtung mit zirkularem Polarisationsfilter 4 entsprechend Figur 1 und mit einer Belichtungszeit von 5500 µs aufgenommen. Während der QR-Code bei der ersten Beispielaufnahme 21 aufgrund starker Spiegelungen nicht gelesen werden kann, werden Spiegelungen bei der zweiten Beispielaufnahme 22 mit einer erfindungsgemäßen optischen Objekterfassungseinrichtung absorbiert, so dass der QR-Code problemlos gelesen werden kann.

Figur 3 zeigt eine erste Beispielaufnahme 31 und eine zweite Beispielaufnahme 32 eines Data Matrix Codes (DMC) auf einem genadelten Gussteil. Die erste Beispielaufnahme 31 des DMC ist durch eine optische Objekterfassungseinrichtung ohne Polarisationsfilter mit einer Belichtungszeit von 1000 µs aufgenommen. Die zweite Beispielaufnahme 32 des DMC ist dagegen durch eine optische Objekterfassungseinrichtung mit zirkularem Polarisationsfilter 4 entsprechend Figur 1 und mit einer Belichtungszeit von 4000 µs aufgenommen. Während der DMC bei der ersten Beispielaufnahme 31 nicht gelesen werden kann, ist ein Lesen des DMC mittels einer erfindungsgemäßen optischen Objekterfassungseinrichtung bei der zweiten Beispielaufnahme 32 auch mit weniger Licht gut möglich.

## Patentansprüche

1. Optische Objekterfassungsvorrichtung zur Erfassung von Objekten auf reflektierenden Oberflächen mit
- zumindest einem auf ein zu erfassendes Objekt (1) ausrichtbaren optischen Sensor (2), der dazu ausgestaltet und eingerichtet ist, aus Gegenstandspunkten Bildpunkte zu erzeugen,
- zumindest einer auf das zu erfassende Objekt (1) ausrichtbaren Beleuchtungseinheit (3),
- zumindest einem aus Objekt-Richtung (11) vor dem optischen Sensor (2) und der Beleuchtungseinheit (3) angeordneten zirkularen Polarisationsfilter (4), der zumindest ein Verzögerungselement (42) und einen sich an dieses anschließenden linearen Polarisationsfilter (41) umfasst, wobei das Verzögerungselement (42) aus Objekt-Richtung (11) vor dem linearen Polarisationsfilter (41) angeordnet ist.

2. Vorrichtung nach Anspruch 1,
bei welcher aus Objekt-Richtung (11) vor dem optischen Sensor (2) und hinter dem zirkularen Polarisationsfilter (4) ein Linsensystem (21) angeordnet ist.

3. Vorrichtung nach Anspruch 2,
bei welcher das Linsensystem (21) zur Brennweitenadaption ausgestaltet und eingerichtet ist.

4. Vorrichtung nach Anspruch 3,
bei welcher der optische Sensor (2), das Linsensystem (21) und der zirkulare Polarisationsfilter (4) auf dieselbe optische Achse ausgerichtet sind.

5. Vorrichtung nach einem der Ansprüche 1 bis 4,
bei welcher das Verzögerungselement (42) durch ein A/4-Verzögerungsplättchen gebildet ist.

6. Vorrichtung nach einem der Ansprüche 1 bis 5,
bei dem der zirkulare Polarisationsfilter (4) derart aus Objekt-Richtung (11) vor der Beleuchtungseinheit (3) angeordnet ist, dass von der Beleuchtungseinheit (3) ausgehendes unpolarisiertes Licht zirkular polarisiert auf das zu erfassende Objekt (1) projiziert wird.

7. Vorrichtung nach einem der Ansprüche 1 bis 6,
bei dem der zirkulare Polarisationsfilter (4) sowohl zwischen dem optischen Sensor (2) und dem zu erfassenden Objekt (1) als auch zwischen der Beleuchtungseinheit (3) und dem zu erfassenden Objekt (1) angeordnet ist.

8. Vorrichtung nach einem der Ansprüche 1 bis 7,
bei welcher der optische Sensor (2) und/oder die Beleuchtungseinheit (3) von einem Gehäuse (5) umfasst sind/ist und bei welcher der zirkulare Polarisationsfilter (4) lösbar am Gehäuse (5) befestigt ist, insbesondere durch Aufschrauben.

9. Aufsatz für eine optische Objekterfassungsvorrichtung nach einem der Ansprüche 1 bis 8 mit
- einem aus Objekt-Richtung (11) vor der optischen Objekterfassungsvorrichtung anordenbaren zirkularen Polarisationsfilter (4), der zumindest ein Verzögerungselement (42) und einen sich an dieses anschließenden linearen Polarisationsfilter (41) umfasst, wobei das Verzögerungselement (42) aus Objekt-Richtung (11) vor dem linearen Polarisationsfilter (41) angeordnet ist,
- einer Befestigungsvorrichtung zur lösbaren Verbindung mit der optischen Objekterfassungsvorrichtung.
